# EUROPEAN PATENT APPLICATION

(11) **EP 2 042 231 A1**
(43) Date of publication of application: **01.04.2009**
(21) Application number: 07117494.0
(22) Date of filing: 28.09.2007
(51) Int. Cl.: B01F 3/04, C02F 3/20

(54) **Aeration device**

(71) Applicant: Grundfos BioBooster A/S, 8850 Bjerringbro (DK)
(72) Inventor: Madsen, Steffen, 8950, Ørsted (DK)
(74) Representative: Plougmann & Vingtoft A/S

(57) **Abstract**

The invention relates to an aeration device (20) for aeration of a liquid. The aeration device comprises a plate (30) of a first material, said first material being permeable to air, said plate having inlet means (31) for inletting air into the plate and means for creating a flow of liquid across the plate of the first material, when said aeration device is immersed or submerged in a liquid. Either the aeration device may be rotated or the aeration device or the aeration device moreover comprises a disc (R) arranged for being placed in parallel to the plate, but leaving a gap between the plate and the disc member. In the latter case, the means for creating a flow of liquid across the plate of the first material comprises means for rotating the disc member around a central axis through the disc member. In either case small or very small bubbles of air may be generated.

## Description

### FIELD OF THE INVENTION

The present invention relates to an aeration device for aeration of a liquid. The invention moreover relates to an aeration system comprising one or more aeration devices. Finally, the invention relates to a method for aerating a liquid and a use of the aeration device for aerating a liquid.

### BACKGROUND OF THE INVENTION

Aeration is the process by which air is circulated through, mixed with or dissolved in a liquid or substance. Aeration of liquids may be advantageous in many types of systems, i.a. treatment of waste water, aerobic biological processes, cultivation of bacteria in liquids, etc. Aeration of liquids is typically achieved by passing the liquid through air by means of fountains, cascades, paddle-wheels or cones or by passing air through the liquid by means of a Venturi tube, aeration turbines or compressed air which can be combined with diffuser air stones, as well as fine bubble diffusers, coarse bubble diffusers or linear aeration tubing. On a given volume of air or liquid, the surface area changes proportionally with drop or bubble size, the very surface area where exchange can occur. Utilizing extremely small bubbles or drops increases the rate of gas transfer (aeration) due to the higher contact surface area.

Fine bubble diffusers are arranged for providing very small air bubbles which rise slowly from the floor of aeration tank, e.g. in a wastewater treatment plant or sewage treatment plant, and provide substantial and efficient mass transfer of oxygen to the water. The oxygen, combined with the food source, sewage, allows the bacteria to produce enzymes which help break down the waste so that it can settle in the secondary clarifiers or be filtered by membranes.

Even though very small bubble sizes, such as ultra fine bubbles in the micrometer size provides a large bubble surface area on which exchange may occur, such small bubble sizes in fine bubble diffusers rise quite slowly and do not provide adequate mixing of sewage in an aeration tank. Moreover, the aeration system in a wastewater or sewage treatment plant providing very small bubble sizes may consume at between 50% and 70% of the energy of the entire plant.

Thus, an alternative aeration of a liquid for provision of small or very small air bubble sizes would be advantageous. In particular, a more power efficient aeration device would be advantageous. Moreover, an aeration device providing faster mixing of small or very small air bubbles with a liquid.

### OBJECT OF THE INVENTION

It is an object of the invention to provide an aeration device that is arranged for providing small and very small air bubbles in a liquid. It is a further object of the present invention to provide a more efficient aeration device. It is yet a further object of the present invention to provide an alternative to the prior art. In particular, it may be seen as an object of the present invention to provide a aeration device that solves the above mentioned disadvantages of the prior art in relation to a high energy consumption and/or slow mixing of liquid and air bubbles.

### SUMMARY OF THE INVENTION

Thus, the above described object and several other objects are intended to be obtained in a first aspect of the invention by providing an aeration device for aeration of a liquid, comprising a plate of a first material, said first material being permeable to air, said plate having inlet means for inletting air into the plate; means for creating a flow of liquid across the plate of the first material, when said aeration devices is immersed or submerged in a liquid. Air under pressure may be inlet into the plate via the inlet means and may exit the plate through the material which is permeable to air. The flow of liquid across the plate will cause the air permeated through the plate material to detach from the plate. The size of the air bubbles detached from the plate will decrease with increasing flow across the plate. Thus, the size of the air bubbles created may be controlled.

According to a second aspect of the invention, the means for creating a flow across the plate comprises means for rotation the plate. Rotation of the plate will provide a flow of liquid across the plate, when at least part of the plate is submerged or immersed in a liquid. The flow of liquid across the plate will assist in detaching bubbles of air permeated through the material of the plate from the plate; this will provide smaller air bubbles compared with a plate across which no flow of liquid is provided.

According to another aspect, the aeration device moreover comprises a disc member of a second material arranged for being placed in parallel to the plate, but leaving a gap between the plate and the disc member, and wherein the means for creating a flow of liquid across the plate of the first material comprises means for rotating the disc member around a central axis through the disc member.

Preferably, the disc member is arranged for being rotated around a central axis through the disc member. However, it is also conceivable that the disc member may be rotated or moved around a decentred axis. The rotation should preferably be around an axis which is predominantly perpendicular to the radial direction in the plane of the disc member.

The rotation of the disc member of the aeration device may be arranged for creating a flow in a liquid, into which the aeration device is submerged or immersed. The flow of the liquid across the plate of the first material has a radial component as well as a cross flow component. These flow components of the flow across the plate may be controlled depending on the distance between the disc member and the plate and on the number of revolutions per time unit.

The aeration device may be in a pressure system, i.e. a closed system that operates under pressure. Alternatively, the aeration device may be submerged or immersed into the liquid in an open tank or in a reactor which is not under pressure.

It should be noted that the term "permeable to air" is meant to denote "permeable to air under pressure" as opposed to "permeable due to chemicals". Moreover, even though the material of the plate is denoted "a first material" and the material of the disc member is denoted "a second material", it is conceivable that the first and the second material are identical.

According to yet another aspect, the plate of the aeration device according to the invention comprises a pattern of internal cavities connected to the inlet means for distribution of air inlet inside the plate. Hereby, an efficient distribution of air inside the plate may be obtained and the generation of air bubbles may be relatively uniform across the surface of the plate.

According to a further aspect, the first material is a sintered material or a polymer material. The polymer material may have chemically formed microscopic pores. A plate of one of these materials provides an appropriate porosity and/or mechanical strength. The sintered material may for instance be a ceramic or metal material.

According to another aspect, the plate of the aeration device is stationary within the aeration device. This provides a simplification of fittings and mounting of the aeration device compared to aeration devices wherein the plate is rotating or moving. Moreover, the size, configuration and/or material of the disc member may render the disc member lighter than the plate; hereby the impact of any disequilibrium or unbalance is reduced compared to when the aeration plate is rotated in that this impact increases with increased mass to be rotated.

According to yet another aspect of the aeration device, the disc member has a surface configuration arranged for creating a flow of a liquid in a direction substantially in parallel to the disc member, when the aeration device is immersed or submerged in the liquid and the disc member is rotated.

The wording "the aeration device is immersed or submerged in liquid" is meant to denote that at least a part of the plate and part of the disc member is immersed or submerged in liquid.

The flow substantially in parallel to the disc member may be split up into a radial component as well as a cross flow component as described above. The created flow of the liquid parallel to the plane of the disc member should provide a flow of the liquid across the surface of the plate of the aeration device, which assists in detachment of air bubbles from the surface of the plate of the aeration device. The surface configuration of the disc member may comprise one or more openings through, recesses in or elevations on said disc member. Alternatively, the disc member may comprise a number of spikes or spokes extending radially from a centre point. The configuration or construction of the disc member may be any appropriate configuration or construction which is arranged for providing a flow or circulation of a liquid upon rotation or movement of the disc member. Preferably, the design or configuration of the disc member is such that a relatively large cross flow component and a relatively small radial component of the flow across the plate is achieved. Openings through, recesses in or elevations on the disc member may provide pulsations in the flow across the surface of the plate of the aeration device, which may facilitate the detachment of air bubbles from the plate of the aeration device, which in turn may provide air bubbles of smaller sizes.

According to another aspect, the surface configuration of the disc member comprises one or more projections arranged in the direction from the centre to the periphery of the disc member. Such projections may be blades or paddles fixed to or integrated with the surface of the disc member. The shape of the projections along the surface of the disc member may be curved or they may define straight lines. Such projections may provide a larger flow of the liquid across the surface of the plate of the aeration device and/or pulsations in the flow across the surface of the plate of the aeration device. Both the larger flow and the pulsations in the flow may facilitate the detachment of air bubbles from the plate of the aeration device, which in turn may air provide bubbles of smaller sizes.

Preferable, the second material comprises a plastic material or a metal alloy. The choice of such materials provides a disc member with an appropriate strength and mass. Stainless steel may be advantageous due to its low corrosion.

According to a further aspect, the aeration device moreover comprises a spacer arranged to hold a disc member pivotally within the periphery thereof. The spacer may ensure that a specific distance exists between the plate and the disc member of the aeration device.

Another aspect of the invention relates to an aeration system comprising one or more of the aeration devices of the invention, and moreover comprising: system inlet means arranged for letting air under pressure into the aeration system, so that liquid may enter into the plate(s) of the one or more aeration devices.

Yet another aspect of the invention relates to a method of aerating a liquid, comprising inletting air into inlet means of a plate of a first material, said first material being permeable to air, rotating the plate of first material or rotating a disc member of a second material about a central axis through the disc member, said disc member being placed in parallel to the plate, but leaving a gap between said plate and said disc member. This method and use provides similar advantages as explained above in relation to the aeration device and aeration system.

Each of the different aspects of the present invention may be combined with any of the other aspects. These and other aspects of the invention will be apparent from and elucidated with reference to the embodiments described hereinafter.

### BRIEF DESCRIPTION OF THE FIGURES

The aeration device and the aeration system according to the invention will now be described in more detail with regard to the accompanying figures. The figures show one way of implementing the present invention and is not to be construed as being limiting to other possible embodiments falling within the scope of the attached claim set. Like reference numerals denote like elements throughout the figures.
Figure 1 shows an exemplary aeration device of the invention in exploded view;
Figure 2 shows an exemplary disc of an aeration device of the invention;
Figure 3 shows an alternative aeration device of the invention in exploded view;
Figure 4 shows an aeration device of the invention seen from the end piece thereof;
Figure 5 is a cross-section of the aeration device of Figure 3;
Figures 6a to 6c show views of an exemplary plate of an aeration device of the invention; and
Figure 7 shows a cross-section of an exemplary aeration device inside a reactor.

### DETAILED DESCRIPTION OF AN EMBODIMENT

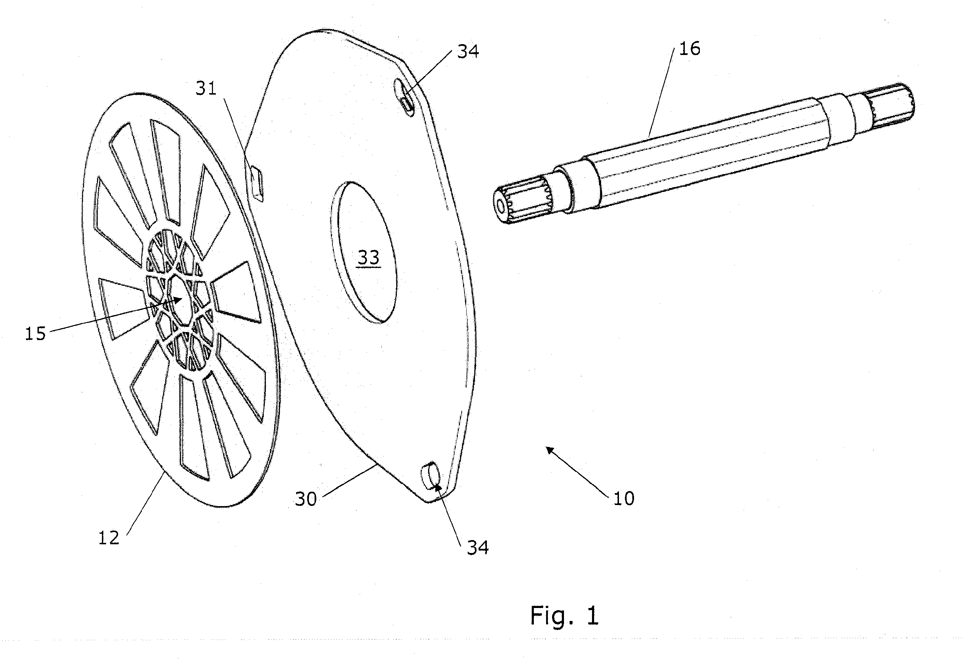

Figure 1 shows an exemplary aeration device 10 of the invention in exploded view. Shown is a plate 30 of a first material, being permeable to air, for example a sintered material, such as ceramic material or a sintered metal material, or a polymer material. The polymer material may have chemically or otherwise formed pores of appropriate size in order to let an appropriate amount of air flow through it.

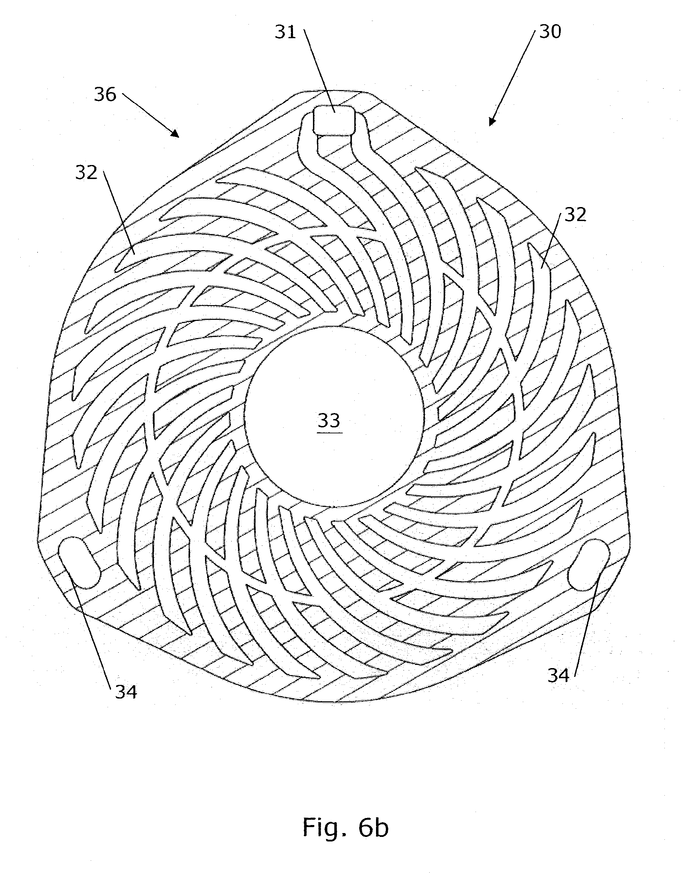

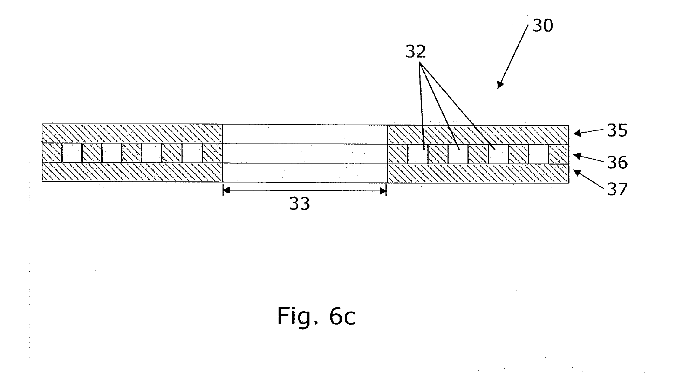

The plate 30 has a central hole 33 as well as openings 31, 34. One of the openings is an inlet 31 connected to a pattern of internal cavities within the plate 30 (see figures 6b and 6c). Air may be input into the inlet 31 for distributing air within internal cavities of the plate 30. The wording "internal cavities" is meant to denote that the cavities lie within the material of the plate 30 and that, apart from a possible air connection by permeation through the first material of the plate, their only connection to the outside of the plate is a connection to the inlet 31 of the plate 30.

The aeration device 10 shown in figure 1 moreover comprises a disc 12 of a second material, arranged in parallel to the plate 14. The second material may be a plastic material or a metal, e.g. stainless steel. However, other materials may be conceivable. It is moreover possible that the first and the second material are identical.

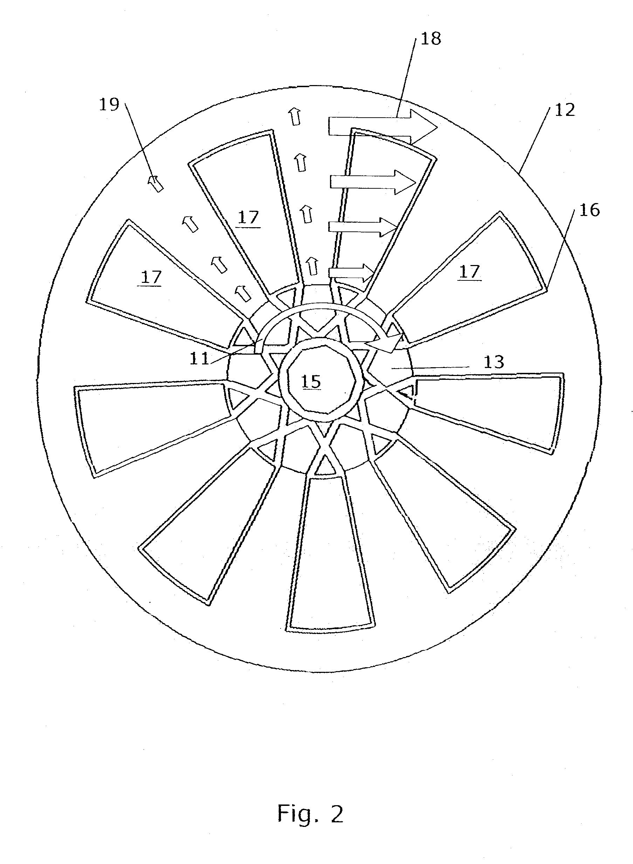

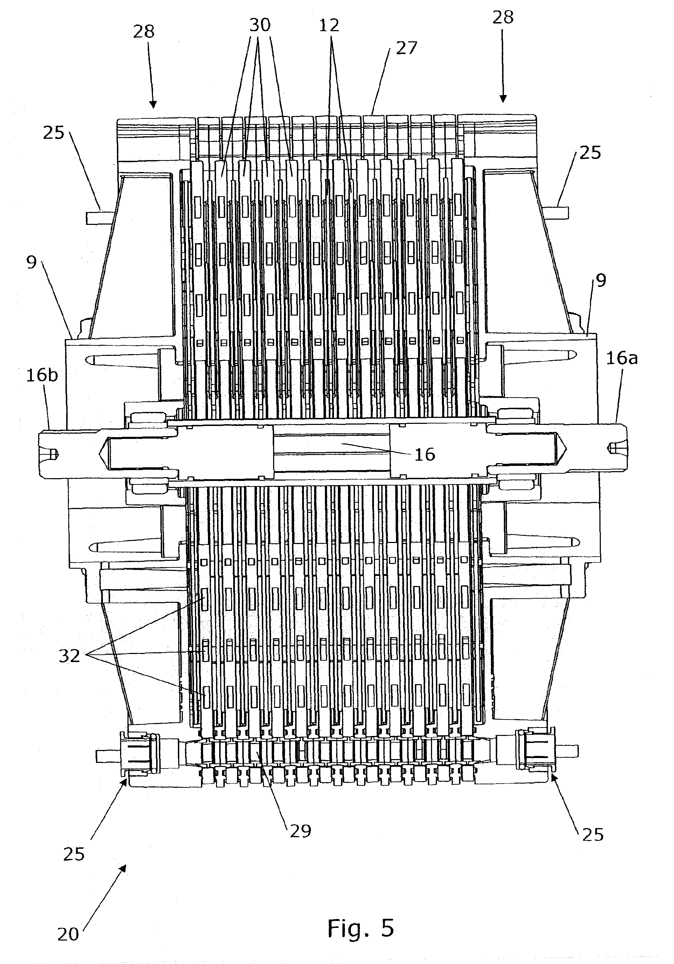

Figure 1 is an exploded view; when the aeration device 10 is assembled the plate 30 and the disc 12 are arranged to be placed close to each other, leaving a small gap in-between (see figure 5). The distance between the disc 12 and the plate 30 may be in the order of millimetres. The aeration device 10 moreover comprises means for rotating the disc 12, viz. a shaft 16 arranged for extending through a central hole 15 of the disc 12 and through the central hole 33 of the plate 30. The inner diameter of the central hole 33 of the plate 30 is larger than the outer periphery of the shaft 16 so that the shaft 16 will not touch the plate 30 when the aeration device 10 is assembled. However, the inner diameter of the central hole 15 of the disc 12 fits snugly together with the outer periphery of the shaft 16; moreover, the central hole 15 has an angular shape so as to obtain a firm grip with the shaft 16 (see Fig. 2) having a corresponding angular shape, so that rotation of the shaft 16 provides rotation of the disc 12. The plate 30 is advantageously held stationary within the aeration device 10, whilst the disc 12 is rotated. The rotation of the disc 12 provides a flow of liquid across the surface of the plate 30, when the aeration device is submerged or immersed in a liquid, as will be explained below. The appropriate rate or speed of rotation of the disc 12 may depend on the pressure of the inlet air, the desired volume of liquid to be aerated, and/or the desired size of air bubbles in the liquid. In general, the faster the rotation of the disc 12, the smaller the size of air bubbles in the liquid. Typically the disc is rotated at a rate between zero and 1500 revolutions per minute, for example at about 100, 250, 350, 500, 750, 1000 revolutions per minute. However, these speeds of rotation are only examplary and should not be taken as limiting the invention, in that other numbers of revolutions per minute may be conceivable.

When the plate 30 is of the ceramic material, the medium pore size of the ceramic material may for example lie between 0.1 µm and 5 µm, or between 0.5 µm and 4 µm, or between 1.5 µm and 2.5 µm. These medium pore sizes are only examplary and should not be taken as limiting the invention, in that ceramic material having any appropriate medium pore size providing bubbles of air of the required size may be conceivable.

The aeration device may be submerged or immersed into the liquid in an open tank or in a reactor which is not under pressure. However, the aeration device 10 is also suitable for being part of a reactor, i.e. a closed system, for aerating any liquid, e.g. a liquid comprising solid components, such as particles of solid material. The liquid to be aerated may be inlet into the reactor in which the aeration device 10 is situated. Air under pressure may be inlet into the air inlet means 31 of the plate of the aeration device, the air is distributed within the internal cavities of the plate 30 and permeates through the material of the plate 30 to form small or very small air bubbles on the surface of the plate 30. The size of the air bubbles detached from the plate 30 depends upon the porosity of the plate 30, the pressure of the air as well as the speed of rotation of the disc 12.

Figure 2 shows an exemplary disc 12 of an aeration device 10 of the invention. The disc has a central hole or opening 15 which has an angular shape so as to provide a firm grip with a similarly shaped angular shaft 16 as explained in connection with figure 1. Moreover, the disc 12 comprises a plurality of through-going holes or openings 13 through which air or liquid may easily flow. The disc 12 moreover comprises a plurality of surface configurations 16. When the aeration device is submerged or immersed in a liquid and the disc 12 is rotated, the surface configurations 16 of the disc are arranged for creating a flow of the liquid in a direction substantially in parallel to the disc 12. The term "parallel to the disc" is meant to denote "parallel to the surface of the disc 12, where the surface lies in the plane of the drawing of figure 2". Thus, the surface configurations 16 are meant to provide a flow parallel to the plane of the drawing of figure 2. This flow has radial components, also denoted recirculation flow, indicated by the arrows 19, as well as cross flow components indicated by the arrows 18. As indicated by the size of the arrows 18 and 19, the cross-flow components may be relatively large in comparison with the recirculation flow components. Since the disc 12 is meant to be arranged close to the plate 30 of the aeration device, similar flow components arise at the surface of the plate 30. Thus, the rotation of the disc 12 may create a relatively large cross-flow of the liquid to be aerated at the surface of the plate 30 of the aeration device 10. This provides an efficient detachment of the air bubbles exiting from the plate 30 of the aeration device 10, which in turn may provides air bubbles of a very small size. It should be noted that the term "air bubbles of a very small size" is meant to denote air bubbles of sizes in the range up to some tens of micrometers, e.g. about 10 to 100 micrometers.

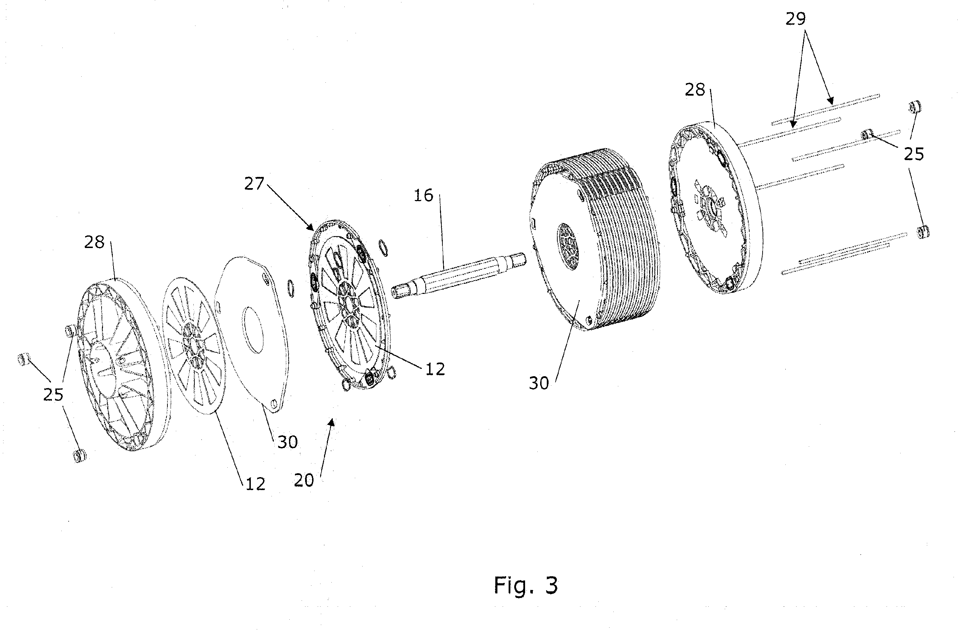

Each of the surface configurations may be a recess in or an elevation on the disc 12. Alternatively, the surface configurations may be through-going holes or openings (see figure 1 or 3, wherein the parts 17 of the disc 12 surrounded by the surface configurations have been cut out) or projections extending from the surface of the disc 12. The surface configuration may be any appropriate combination of the above for providing a flow of a liquid. The parts 17 of the disc 12 surrounded by the surface configurations may be cut out.

Figure 3 shows an alternative aeration device 20 of the invention in exploded views. Figure 3 shows an aeration device 20 comprising a number of aeration plates 30 and a number of discs 12. One of the discs 12 is shown as held within the inner periphery of a spacer 27. The disc 12 may rotate or pivot freely within the spacer 27. The spacer 27 is arranged to fixate the disc 12 in the direction of the shaft 16 so that the disc is hindered from moving in the longitudinal direction of the shaft 16. It should be noted that each of the discs 12 of the aeration device 20 is held within a spacer. Also shown in figure 3 are end pieces 28 of the aeration device 20.

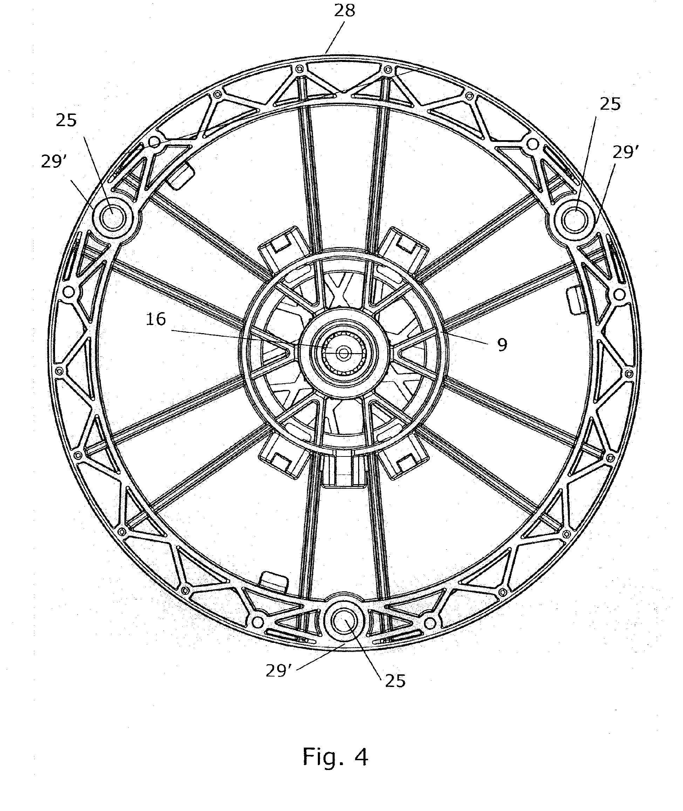

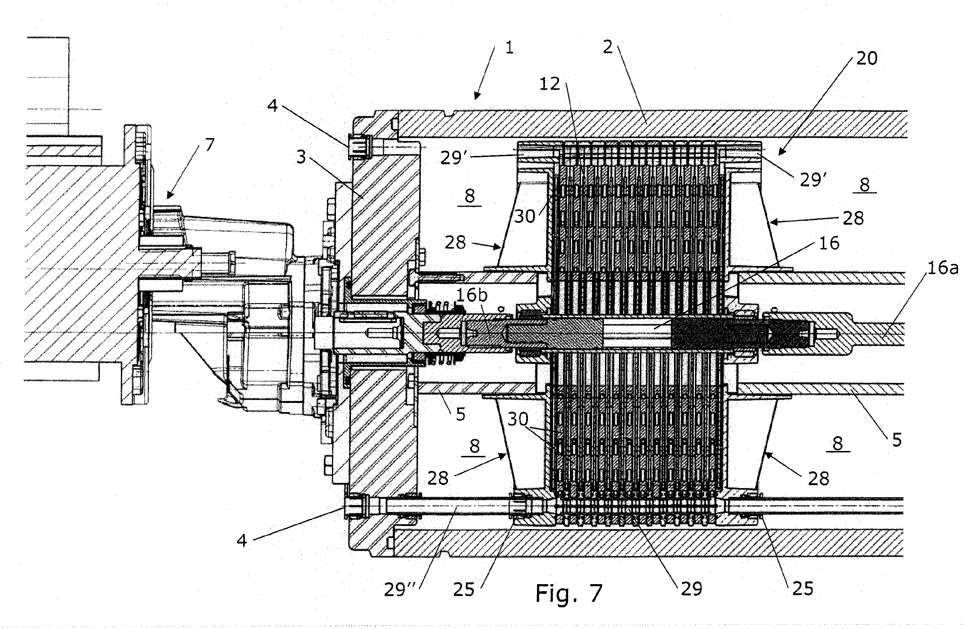

Figure 4 shows the aeration device 20 as seen from the side of one of the end pieces 28 thereof. The end pieces 28 of the aeration device 20 comprise a central hole through which a shaft 16 may extend. The shaft extending through the central hole of the end pieces 28 may be the shaft 16 of the aeration device 20, or a shaft 16a, 16b (see figure 7) fastened or fixated to the shaft 16 of the aeration device 20. Moreover the end piece 28 comprises through-going holes 29' through which pipes 29 may extend (see figure 7). The pipes 29 may be connected to the inlet 31 (see figure 1) of the plates 30 so as to provide an airtight connection for air that is inlet through a hole or inlet 29' of the end piece 28 to the air inlet 31 of each plate 30 of the aeration device 20. The inlets or holes 29' of the end piece 28 are connected to piping (not shown) by means of tightening parts 25 (see figure 3 or 7).

From figure 4 it may be seen that the end piece 28 comprises three tightening parts 25 which is connected to the pipes 29 extending through the plates of the aeration device (see figure 3 or 5). Moreover, a central circular connection part 9 is shown. The connection part 9 may be connected to tubing or pipe (not shown) so that the shaft 16a (see figure 5) connected to the shaft 16 inside the aeration device may be isolated from fluid.

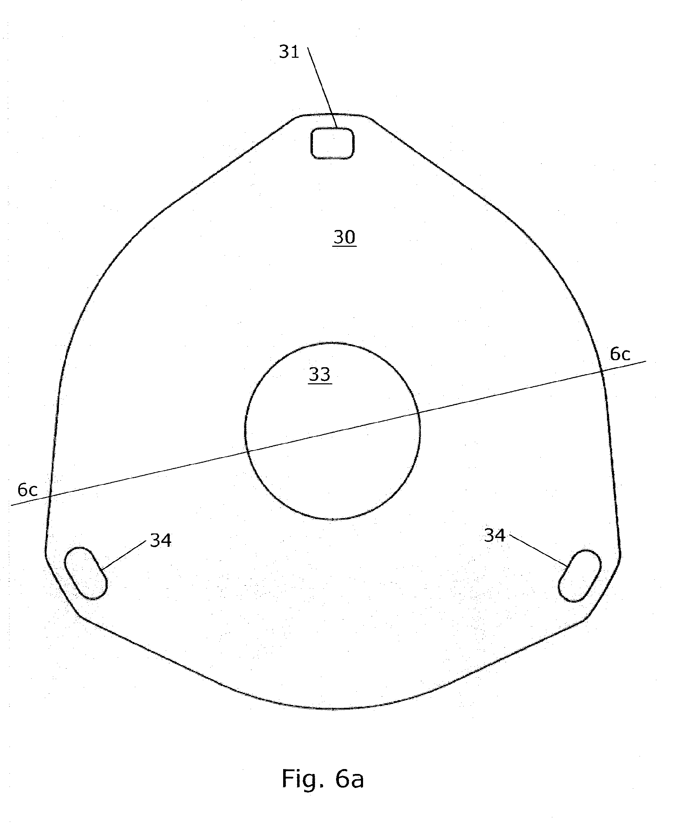

Figure 5 is a cross-section of the aeration device of Figure 3 in an assembled or mounted state. From figure 5 it can be seen that the peripheries of the spacers 27 are adjacent to each other or to the periphery of one of the end pieces 28; however, a small gap is left between neighbouring spacers 27 and between the spacer adjacent each of the end pieces 28 and the end piece concerned. Liquid may flow through these gaps. The plates 30 are held stationary within the aeration device 20 and pipes 29 extend through the openings 31, 34 of the plates 30 (only one pipe 29 is shown in figure 5). However, the discs 12 are freely pivotable or rotatable within the aeration device 20 in that each disc 12 rest on the shaft 16 and within a spacer 27, pivotable or rotatable upon rotation of the shaft 16, and in that the pipes 29 are arranged outside the diameter of the discs 12. Within each of the plates 30 of the aeration device 20, cavities 32 are shown (see also figures 6a-6c).

Figures 6a to 6c show views of an exemplary plate 30 of an aeration device according to the invention. Figure 6a shows that the plate 30 has a central opening 33 through which a shaft may extend. The shaft 16 used in conjunction with the aeration device 20 should be smaller than the central opening 33 so that the shaft 16 may extend through the opening 33 without touching or being in connection with the plate 30. The plate 30 moreover comprises three openings 31, 34 close to the periphery of the plate. One or more of the openings 31, 34 is/are arranged for being connected to tubing, a conduit or a pipe for inletting air as described in connection with figure 6b. In the embodiment shown in figure 6b, one of the inlets, viz. the topmost inlet 31 as shown in figure 6b, is connected to piping for inletting air into the internal cavities 32 of the plate 30. The other two openings 34 may be used for letting tubing carrying liquid through the plate 30 without coming into contact with the interior of the plate 30.

The shape and size of the plate 30 is correlated to the size of the discs 12 of the aeration device, so that piping 29 may extend through the holes 31 parallel to the shaft 16 (see figure 4 or 5) and continue outside the outer diameter of the discs 12, viz. without touching, being in connection with or hindering the rotation of the discs 12.

Whilst figure 6a shows the plate 30 as seen from above or from below, viz. from the outside, figure 6b shows in internal layer 36 of the plate 30, which is not normally visible to the eye, unless the plate is separated into parts. The layer 36 comprises a pattern of interconnected cavities 32. The pattern of cavities 32 is connected to an opening 31 through the layer 36, viz. the topmost opening 31 as seen in the orientation of figures 6a and 6b. The two other openings 34 are closed-off from the pattern of cavities 32 so that no air from the pattern of cavities may enter into these closed-off openings. These closed-off openings 34 may be used for letting tubing through the plate 30 without being in connection with the plate 30. This might e.g. be useful for throughput of liquid, if the aeration device 20 is used in conjunction with a filtering device, e.g. in a pressure reactor for purification of waste water.

Figure 6c shows a cross-section through the plate 30 along the line 6c-6c in figure 6a. It can be seen that the plate comprises layers, viz. a bottom layer 37, an internal or middle layer 36, which is the layer shown in figure 6b, as well as an upper layer 35 as seen in the direction of the orientation of figure 6c.

In operation of the aeration device, the plate 30 is arranged to be placed adjacent to, but with a distance to, a disc 12 as seen in figures 1 and 3. Air or gas under pressure is directed to the aeration plate 30 through the inlet 31. The aeration device 20 is submerged or immersed into liquid. The pressure difference between the outside and the inside of the plate 30 may be any pressure difference greater than zero, i.e. the pressure inside the plate 30 must be greater than the pressure outside the plate 30. The greater the pressure difference, the more air may permeate through the material of the plate 30. The pressure difference between the inside and the outside of the plate 30 of the aeration device may e.g. 1, 3, 4, 5, 6 bar, but of course other values are conceivable.

The disc 12 may rotate to provide a cross flow of the liquid into which the aeration device 20 is submerged or immersed, along the surface of the plate 30 as seen in figure 2. The first material of the plate 30 is permeable to air and has a medium pore size chosen so as to facilitate provision of air bubbles of appropriate size. The air is inlet into the plate 30 through its opening 31 by tubing, conduits or pipes 29 (see figure 3 or 5). If the aeration device 20 is used in a reactor comprising more than one such aeration device 20, each aeration device 20 may also comprise air outlet means 29 so that some of the air under pressure may be inlet into the inlets of the plates 30 of a first aeration device 20 and some is led further on to the next aeration device.

It should be noted that the air may be atmospheric air or a gas such as pure oxygen. Atmospheric air may be advantageous even though it only comprises about 20% oxygen due to lower acquisition costs.

It should be noted, that another number of openings 31, 34 is conceivable as well as all openings 31, 34 might be arranged for inletting air into the plate from inlet tubing connected to the openings 31, 34.

Figure 7 shows a cross-section of an exemplary aeration device 20 inside a closed reactor 1. The reactor may comprise a number of aeration devices 20, even though only one such aeration device 20 is shown.

The aeration device 20 comprises a plurality of aeration plates 30 as well as a plurality of discs 12 and two end pieces 28. The aeration plates 30 are stationary within the aeration device 20 and within the reactor 1. The discs 12 are placed inside the aeration device 20 so as to be free to rotate within the aeration device 20. Between any two neighbouring plates 30, a disc 12 is situated, held within a spacer 27 (see figure 3 or 5). A shaft 16 extends through the plates 30 and the discs 12 of the aeration device 20, viz. through the central hole 33 of each plate 30 and through the central hole 15 of each disc 12. The ends of the shaft 16 through the aeration device 20 are connected to shafts 16a, 16b. The shaft 16a extends in the longitudinal direction of the reactor 1 and may be connected to a shaft through another aeration device (not shown). The opposite end of the shaft 16 is connected to another shaft 16b which in turn is connected to a motor 7 for driving or rotating the shafts 16, 16a and 16b. Each of the shafts 16a and 16b lie within a pipe 5 so as to be isolated from liquid in the reactor. Each pipe 5 is connected to the connection part 9 of the corresponding end piece 28. Liquid to be aerated may be led into the parts 8 of the reactor through an inlet (not shown).

Liquid inlet into the reactor 1 under pressure will flow through the space or gap between the aeration device 20 and the wall 2 of the reactor 1. If more than one aeration device 20 is present in the reactor 1, the liquid will flow along the side of the reactor 1 until the aeration device 20 that is placed farthest back in relation to the motor 7 connected to the reactor 1. From here, the liquid 8 will enter into the aeration devices in the reactor 1, i.e. in-between the plates 30. Liquid 8 may enter through the end piece 28 of a reactor, through holes of the discs 12 and into the plates 30 of the aeration device(s) 20.

Air under pressure is inlet into the plates 30 of the aeration device 20 via the inlets 31. The air will flow into the internal cavities 32 of the plates 30 (see figures 6a-6c) and will permeate through the material of the plates 30 into the liquid in the reactor 1, thus aerating the liquid. The air is inlet into the plates 30 via pipe or tubing 29 (see figure 3) connected to the inlets 31 of the plates 30 and to inlet means 4 in an end wall 3 of the reactor 1, via pipe or tubing 29" connected to the pipe or tubing 29 inside each aeration device 20.

The reactor 1 may e.g. be a purification reactor for treatment of waste water. The aeration devices 20 may be used together with filtering devices for mechanical filtering in an activated sludge process for the treatment of sewage or waste water. In such an activated sludge process, atmospheric air or pure oxygen is forced into raw sewage combined with organisms to develop a biological floc which reduces the organic content of the sewage. The biological floc may be filtered by the filtering devices in the reactor.

Even though the aeration device 20 has been described as comprising aeration plates 30 and rotatable discs 12 only, it should be noted that it is also conceivable that some of the plates 30 of the aeration device 20 were filtering plates instead. Such filtering plates would be arranged with outlet means for outletting filtered liquid from the filtering plates. The filtering plates would advantageously have the same outer dimensions as the aeration plates 30 and could be of the same material. However, such filtering plates would advantageously comprise an additional membrane layer. The rotatable discs 12 in the vicinity of the filtering plates would be advantageous in order to prevent clogging or fouling of the filtering plates. Such an arrangement of filtering plates and aeration plates, e.g. 9 filtering plates and 3 aeration plates, in a device could be advantageous in a purification reactor for treatment of waste water.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An aeration device (10; 20) for aeration of a liquid, comprising:
- a plate (30) of a first material, said first material being permeable to air, said plate having inlet means (31) for inletting air into the plate;
- means for creating a flow of liquid across the plate of the first material, when said aeration device (10; 20) is immersed or submerged in a liquid.

2. An aeration device (10; 20) according to claim 1, wherein the means for creating a flow across the plate comprises means for rotation the plate.

3. An aeration device (10; 20) according to claim 1, wherein the aeration device moreover comprises a disc member (12) of a second material arranged for being placed in parallel to the plate (30), but leaving a gap between the plate (30) and the disc member (12), and wherein the means for creating a flow of liquid across the plate (30) of the first material comprises means for rotating the disc member (12) around a central axis through the disc member (12).

4. An aeration device (10; 20) according to any of the claims 1 to 3, wherein said plate comprises a pattern of internal cavities (32) connected to the inlet means (31) for distribution of air inlet inside the plate.

5. An aeration device (10; 20) according to any of the claims 1 to 4, wherein first material is a sintered material or a polymer material.

6. An aeration device (10; 20) according to any of the claims 1 to 5, wherein the sintered material is a ceramic or metal material.

7. An aeration device (10; 20) according to any of the claims 3 to 6, wherein said plate (30) is stationary within the aeration device (10; 20).

8. An aeration device (10; 20) according to any of the claims 3 to 7, wherein said disc member has a surface configuration (16; 17) arranged for creating a flow of a liquid in a direction substantially in parallel to the disc member (12), when the aeration device (10; 20) is immersed or submerged in the liquid and the disc member (12) is rotated.

9. An aeration device (10; 20) according to claim 8, wherein said surface configuration (16; 17) comprises one or more openings through, recesses in or elevations on said disc member (12).

10. An aeration device (10; 20) according to any of the claims 8 or 9, wherein said surface configuration comprises one or more projections arranged in direction from the centre to the periphery of the disc member (12).

11. An aeration device (10; 20) according to any of the claims 3 to 10, wherein the second material comprises a plastic material or a metal alloy.

12. An aeration device (10; 20) according to any of the claims 3 to 11, wherein said aeration device (10; 20) moreover comprises a spacer (27) arranged to hold a disc member (12) pivotally within the periphery thereof.

13. An aeration system (1) comprising one or more of the aeration devices (10; 20) according to any of the claims 1 to 12, moreover comprising: system inlet means arranged for letting air under pressure into the aeration system, so that liquid may enter into the plate(s) of the one or more aeration devices.

14. A method of aerating a liquid, comprising:
- inletting air into inlet means (31) of a plate (30) of a first material, said first material being permeable to air,
- rotating the plate (30) of first material or rotating a disc member (12) of a second material about a central axis through the disc member (12), said disc member (12) being placed in parallel to the plate, but leaving a gap between said plate (30) and said disc member (12).

15. Use of aeration device according to any of the claims 1 to 13 or aeration system according to claim 14 for aerating a liquid.
